# EUROPEAN PATENT SPECIFICATION

(11) **EP 3 885 258 B1**
(45) Date of publication and mention of the grant of the patent: **17.01.2024**
(21) Application number: 21153458.1
(22) Date of filing: 26.01.2021
(51) Int. Cl.: B64C 29/00, B64C 11/00, B64C 27/08, B64C 27/20, B64C 39/00

(54) **DUCTED FAN DEVICE AND AIRCRAFT**
MANTELPROPELLERVORRICHTUNG UND FLUGZEUG
DISPOSITIF DE SOUFFLANTE ET AÉRONEF

(30) Priority: 23.03.2020 JP 2020051197
(43) Date of publication of application: 29.09.2021
(73) Proprietor: Mitsubishi Heavy Industries, Ltd., Tokyo 1008332 (JP)
(72) Inventor: MORISAKI, Yuki, Tokyo 1008332 (JP); IMAI, Kazuhiro, Tokyo 1008332 (JP); KAI, Karikomi, Tokyo 1008332 (JP); SAIKI, Yasuhiro, Tokyo 1008332 (JP)
(74) Representative: Studio Torta S.p.A.

(56) References cited:
- EP-A1- 3 770 063
- ES-A1- 2 288 083
- JP-A- S6 154 352
- KR-A- 20170 125 635

## Description

### TECHNICAL FIELD

The present disclosure relates to a ducted fan device and an aircraft.

### BACKGROUND ART

In recent years, along with improvements in the performance of power electronics, development in the electrical powering of aircraft has been actively carried out, and one of the developments is a Vertical Take Off & Landing (VTOL) type aircraft.

In the electric VTOL aircraft, the type of the airframe differs depending on requirements such as a cruise speed, a cruise range, and a payload. For example, when a high cruise speed or a long cruise range is required, a tilt wing machine or a tilt rotor machine including a main wing is often employed.

On the other hand, when the main wing and the rotor are tilted (inclined), it is difficult to stably control the flight, so that when the cruise speed is low and the cruise range is short, a fixed rotor machine is often employed.

At this time, regardless of the type, it is desirable to employ a ducted fan in consideration of the noise, the thrust force during hovering, or the like.

In a ducted fan, separation of air in the vicinity of an opening (particularly, a lip portion) of a duct into which air is introduced greatly affects thrust force performance. In particular, in the case in which the air flows obliquely with respect to the rotation axis of the fan, i.e. a transition mode between take-off or landing and cruising flight, cross wind situation, or the like, separation is likely to occur at the lip portion. Therefore, how to suppress the separation at the lip portion is an important problem.

It is also desirable to generate thrust force more efficiently with any type of fan. In this case, for example, Patent Document 1 discloses a ducted fan (fan with a duct) that increases thrust force by providing cowls on an inner peripheral side and an outer peripheral side of a lower end of a duct.

### CITATION LIST

### PATENT LITERATURE

Patent Document 1: JP 2013-527364 T

### SUMMARY OF INVENTION

### TECHNICAL PROBLEM

In addition to the ducted fan disclosed in Patent Document 1, there is a demand to efficiently generate thrust force by a method different from that. Further, Patent Document 1 does not refer to suppression of separation at the lip portion of the duct. Other prior art documents are: KR20170125635 A, ES2288083 A1 and JPS6154352 A.

According to its abstract, KR20170125635 A discloses a flight apparatus having a blowing function and including: a flying body for carrying out a hovering flight at a predetermined position with at least one rotor generating lift; a blowing means installed in the flying body for blowing air in a direction toward a first target point and changing a blowing direction toward a second target point by a user operation; and a control means for controlling the rotor of the flying body in accordance with the change of the blowing direction of the blowing means so that the changed blowing direction of the blowing means is maintained in the direction toward the second target point.

According to its abstract, ES2288083 A1 discloses a lifting and propulsion system consisting of a rotating propelling and lifting system around transversal shafts near the center of gravity.

According to its abstract, JPS6154352 A discloses an aero floating-up machine having posture stabilizing mechanism, comprising ducts or fans formed onto a machine body, whereby the fan in the duct is installed onto the rotary part of a rotary apparatus.

The present disclosure has been made in view of such circumstances, and an object of the present disclosure is to provide a ducted fan device and an aircraft capable of improving thrust force and suppressing separation at a lip portion.

### SOLUTION TO PROBLEM

In order to solve the above problems, a ducted fan device according to appended independent claim 1 is disclosed.

An aircraft according to an aspect of the present disclosure includes the above-described ducted fan device.

### ADVANTAGEOUS EFFECTS OF INVENTION

According to the ducted fan device and the aircraft according to the present disclosure, thrust force can be improved, and separation at the lip portion can be suppressed.

### BRIEF DESCRIPTION OF DRAWINGS

FIG. 1 is a plan view of a ducted fan device according to a first embodiment of the present disclosure.
FIG. 2 is a cross-sectional view of the ducted fan device taken along cutting line II-II illustrated in FIG. 1.
FIG. 3 is a plan view of an aircraft provided with the ducted fan device illustrated in FIG. 1.
FIG. 4 is a partially enlarged view of a F4 portion illustrated in FIG. 2.
FIG. 5 is a partially enlarged view illustrating the vicinity of a lip portion of a ducted fan according to a reference example.
FIG. 6 is a longitudinal cross-sectional view of a ducted fan device according to a modified example of the first embodiment taken along cutting line II-II (see FIG. 1), and a longitudinal cross-sectional view of a ducted fan device according to a modified example of a second embodiment taken along cutting line IX-IX (see FIG. 7).
FIG. 7 is a plan view of a ducted fan device according to the second embodiment of the present disclosure.
FIG. 8 is a perspective view of an aircraft provided with the ducted fan device illustrated in FIG. 7.
FIG. 9 is a cross-sectional view of the ducted fan device taken along cutting line IX-IX illustrated in FIG. 7.
FIG. 10 is a simplified plan view of the ducted fan device.

### DESCRIPTION OF EMBODIMENTS

### First Embodiment

Hereinafter, a ducted fan device and an aircraft according to a first embodiment of the present disclosure will be described with reference to the drawings.

### Configuration of Ducted Fan Device

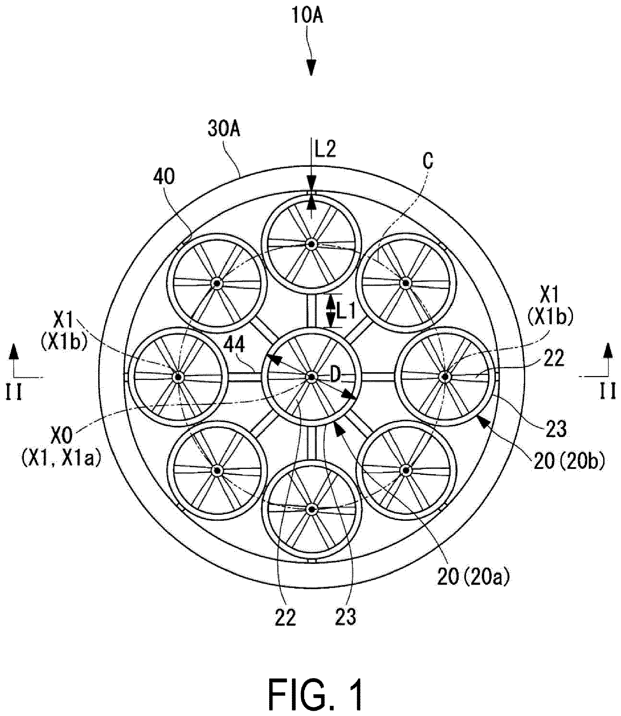

First, an outline of the configuration of a ducted fan device 10A will be described with reference to FIGS. 1 to 3.

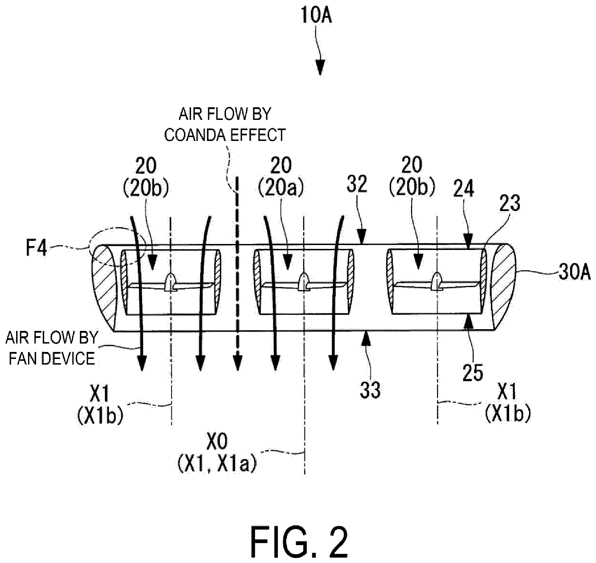

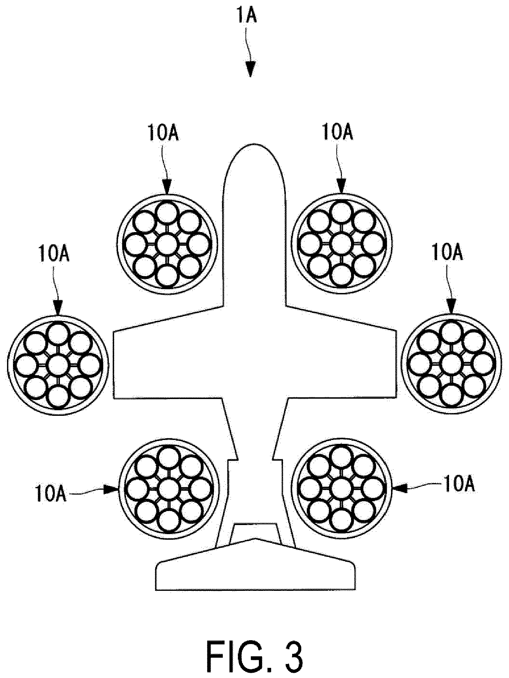

FIG. 1 is a plan view of the ducted fan device 10A. FIG. 2 is a cross-sectional view of the ducted fan device 10A taken along cutting line II-II illustrated in FIG. 1. FIG. 3 is a plan view of an aircraft 1A provided with the ducted fan device 10A.

As illustrated in FIGS. 1 and 2, the ducted fan device 10A includes a plurality of fan devices 20 that are ducted fans, and a cylindrical large duct 30A that is provided so as to surround all of the fan devices 20.

Each fan device 20 includes a fan 22 and a cylindrical small duct 23 surrounding the fan 22.

Each fan 22 is driven to rotate about its axis X1 by an electric motor (not illustrated). Drive of the electric motors are individually controlled by a control unit (not illustrated).

The control unit includes, for example, a central processing unit (CPU), a random access memory (RAM), a read only memory (ROM), and a computer-readable storage medium, or the like.

A series of processes for implementing various functions is stored in a storage medium or the like in the form of a program, for example, and the CPU reads the program into the RAM or the like and executes information processing and computation processing, thereby implementing various functions.

Note that the program may be preinstalled in the ROM or other storage medium, may be provided in the form of being stored in a computer-readable storage medium, or may be distributed through wired or wireless communication means, or the like.

Examples of the computer-readable storage medium include a magnetic disk, a magneto-optical disk, a CD-ROM, a DVD-ROM, and a semiconductor memory, or the like.

The small duct 23 is a cylindrical member extending in the direction of the axis X1, and accommodates the fan 22 inside so as to surround the entire circumferential direction of the fan 22. Hereinafter, when simply described as "inside" or "outside", it means "inside in the radial direction" or "outside in the radial direction" with respect to the axis.

In the small duct 23, the opening on one end side is an inlet 24, and the opening on the other end side is an outlet 25.

When the fan 22 accommodated in the small duct 23 rotates about the axis X1, an air flow from the inlet 24 toward the outlet 25 is generated.

The plurality of fan devices 20 configured as described above are accommodated in a large duct 30A, which is a cylindrical member extending in the direction of the axis X0 and has a sufficiently larger diameter than the small duct 23.

The plurality of fan devices 20 accommodated in the large duct 30A include one central fan device 20a and a plurality of peripheral fan devices 20b. At this time, as illustrated in FIG. 2, the central fan device 20a and the plurality of peripheral fan devices 20b are disposed such that the respective fans 22 are located on the same plane orthogonal to the axis X0. It should be noted that the fans 22 do not need to be strictly disposed on the same plane, and the positions and angles of the fans 22 may be appropriately adjusted according to the specifications of the ducted fan device 10A.

As illustrated in FIG. 1, the central fan device 20a is disposed substantially at the center of the large duct 30A. At this time, when the axis X1 of the central fan device 20a is particularly defined as the axis X1a, the axis X0 of the large duct 30A, that is, the axis X0 of the ducted fan device 10A substantially coincides with the axis X1a of the central fan device 20a.

The plurality of peripheral fan devices 20b are disposed at the outer peripheral of the small duct 23 included in the central fan device 20a. At this time, the axis X1b of each peripheral fan device 20b is preferably disposed at equal angular intervals in the circumferential direction on a circle C centered on the axis X1a of the central fan device 20a. Thus, the peripheral fan devices 20b can be uniformly disposed from the viewpoint of the occupied area. In addition, the interval between the central fan device 20a and the peripheral fan devices 20b can be managed more easily than when the peripheral fan devices 20b are randomly disposed.

In the case of FIG. 1, the circle C centered on the axis X1a of the central fan device 20a is one circle, but may be two or more circles. In this case, the peripheral fan devices 20b are regularly disposed on a plurality of concentric circles around the axis X1a.

As illustrated in FIG. 1, when the diameter of the small duct 23 is D, a clearance L1 between the small duct 23 of the central fan device 20a and the small duct 23 of the peripheral fan device 20b is 0.5D or more and 1.5D or less, more preferably 0.5D or more and 1.0D or less. Here, the clearance L1 is the shortest distance between the small ducts 23. By securing the clearance L1 in this manner, an air flow by the Coanda effect, which will be described later, is easily generated.

A clearance L2 is secured between each small duct 23 of each peripheral fan device 20b and the inner peripheral surface of the large duct 30A. Thus, as will be described later, the air colliding with the outer peripheral surface of the large duct 30A is easily guided to the small duct 23.

Each peripheral fan device 20b is fixed by connecting the small duct 23 to the inner peripheral surface of the large duct 30A with a support member 40. The central fan device 20a is fixed by connecting the small duct 23 to the small duct 23 of each peripheral fan device 20b with a connecting member 44. Thus, the central fan device 20a, the peripheral fan devices 20b, and the large duct 30A are integrated, and the ducted fan device 10A is configured to be rigid.

As illustrated in FIG. 3, the ducted fan device 10A configured as described above is attached to an aircraft 1A such as a tilt rotor aircraft or a tilt wing aircraft, for example, and serves as a device that generates thrust force (thrust force for levitation and propulsion) necessary for flight of the aircraft 1A.

Note that the ducted fan device 10A in FIG. 3 is illustrated as being separated from the main wing, the fuselage, or the like for ease of understanding, but is actually fixed to the main body of the aircraft 1A such as the main wing or the fuselage.

### Flow of Air by Coanda Effect

Next, the flow of air due to the Coanda effect will be described with reference to FIG. 2.

As illustrated in FIG. 2, the fan devices 20 accommodated in the large duct 30A are individually driven to generate air flow. At this time, for example, the air flow generated by the central fan device 20a and the air flow generated by the peripheral fan device 20b adjacent to the central fan device 20a draw the air between the air flows by the Coanda effect. Thus, an air flow is also induced between the central fan device 20a and the peripheral fan device 20b by the Coanda effect. That is, the air flow can be generated without providing a fan or the like between the central fan device 20a and the peripheral fan device 20b.

Since the air flow by the Coanda effect is generated between the central fan device 20a and the plurality of peripheral fan devices 20b, a larger air flow is generated from the inlet 32 of the large duct 30A toward the outlet 33 as compared with the air flow generated only by the plurality of fan devices 20. Further, since each fan device 20 is surrounded by the large duct 30A, the air flow generated by each fan device 20 and the air flow generated by the Coanda effect are rectified, and a larger thrust force can be generated by the ducted fan device 10A as a whole.

It should be noted that, of course, an air flow may also be generated by the Coanda effect between the peripheral fan devices 20b or between each of the peripheral fan devices 20b and the large duct 30A. These air flows contribute to improving the thrust force of the ducted fan device 10A.

### Flow of Air by Double Duct

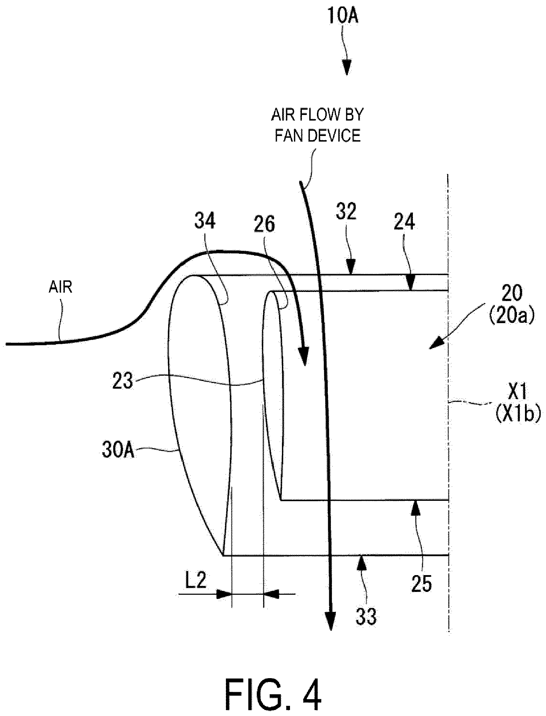

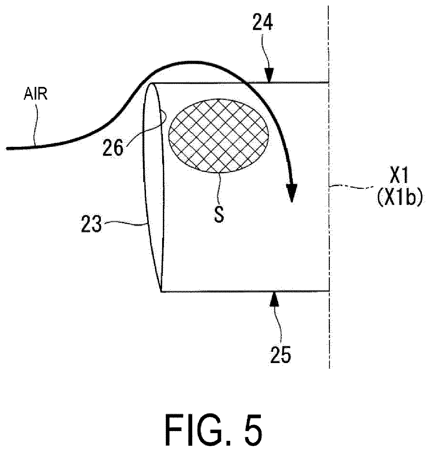

Next, the flow of air by the double duct will be described with reference to FIGS. 4 and 5.

FIG. 4 is a partially enlarged view of the F4 portion illustrated in FIG. 2. FIG. 5 is a partially enlarged view illustrating the vicinity of a lip portion of a ducted fan according to a reference example.

The large duct 30A and the small duct 23 adjacent thereto are in a so-called double duct relationship, and air separation at a lip portion 26 of the small duct 23 is suppressed. The effect of the double duct will be briefly described below.

As illustrated in FIG. 4, when air flows from the side of the ducted fan device 10A (i.e., when a cross wind is blowing), air flows in the vicinity of the large duct 30A and the small duct 23 adjacent thereto as follows.

That is, the air collides with the outer peripheral surface of the large duct 30A and then flows to the inlet 32 side of the large duct 30A. The air flowing to the inlet 32 side flows so as to pass over the lip portion 34 of the large duct 30A and flows around to the inside of the large duct 30A, and then flows to the inlet 24 side of the small duct 23. At this time, since the clearance L2 is secured between the large duct 30A and the small duct 23, the air having passed over the lip portion 34 of the large duct 30A is easily guided to the inlet 24 of the small duct 23. The air guided to the inlet 24 of the small duct 23 joins the air flow generated by the fan device 20, thereby passing through the inside of the small duct 23 along the lip portion 26 of the small duct 23.

On the other hand, as illustrated in FIG. 5, when the large duct 30A is omitted, air flows in the vicinity of the small duct 23 as follows.

That is, the air collides with the outer peripheral surface of the small duct 23 and then flows directly toward the inlet 24 side. At this time, the air flows so as to pass over the lip portion 26 and flows around to the inside of the small duct 23. The air passing over the lip portion 26 of the small duct 23 is largely separated from the lip portion 26 by its momentum. As a result, air separation occurs at the lip portion 26 of the small duct 23 (see a separation portion S).

According to the present embodiment, the following effects are obtained.

The respective air flows generated by the central fan device 20a and the peripheral fan devices 20b draw in the surrounding air by the Coanda effect, so that an air flow by the Coanda effect can be induced between the small duct 23 of the central fan device 20a and the small ducts 23 of the peripheral fan devices 20b. That is, the air flow can be generated between the small ducts 23 without providing an air flow generation device such as a fan device. Thus, the thrust force of the ducted fan device 10A as a whole is improved. Further, by surrounding all the fan devices 20 with the large duct 30A, the thrust force of the ducted fan device 10A as a whole can be further improved.

In addition, since the peripheral fan devices 20b are disposed at the outer peripheral of the small duct 23 included in the central fan device 20a, it is easy to manage the interval between the central fan device 20a and the peripheral fan devices 20b compared to a case where the fan devices 20 are irregularly disposed.

In particular, when the peripheral fan devices 20b are disposed at equal angular intervals on a circle C centered on the axis X1a of the central fan device 20a, the peripheral fan devices 20b can be evenly disposed from the viewpoint of the occupied area.

In addition, since the large duct 30A and the small duct 23 adjacent to the large duct 30A have a so-called double duct relationship, it is possible to suppress separation at the lip portion 26 of the small duct 23 accommodated inside by the large duct 30A and to suppress a decrease in thrust force due to the separation.

Further, since the clearance L1 between the small duct 23 of the central fan device 20a and the small duct 23 of each peripheral fan device 20b is 0.5D or more and 1.5D or less, an appropriate clearance can be provided between the small duct 23 of the central fan device 20a and the small duct 23 of each peripheral fan device 20b. This makes it possible to efficiently induce air flow by the Coanda effect. In a case where the clearance L1 is too short or too long, the surrounding air is not sufficiently drawn in, and the air flow is hardly induced.

In addition, by providing a plurality of fan devices 20 that actually generate air flow, even when one fan device 20 fails, the thrust force of the failed fan device 20 can be supplemented by the other fan devices 20, so that redundancy of the entire ducted fan device 10A can be ensured.

In addition, since the electric motor that drive the fan 22 of each of the fan devices 20 is individually controlled by the control unit, for example, the number of rotations of each of the fans 22 can be individually controlled. Accordingly, it is possible to perform control such that the number of rotations of the fan 22 included in the fan device 20 disposed at a place where separation is likely to occur is increased to suppress separation.

The fan devices 20 each may have the same diameter or different diameters. For example, the diameter of each peripheral fan device 20b may be smaller than the diameter of the central fan device 20a.

### Modified Example

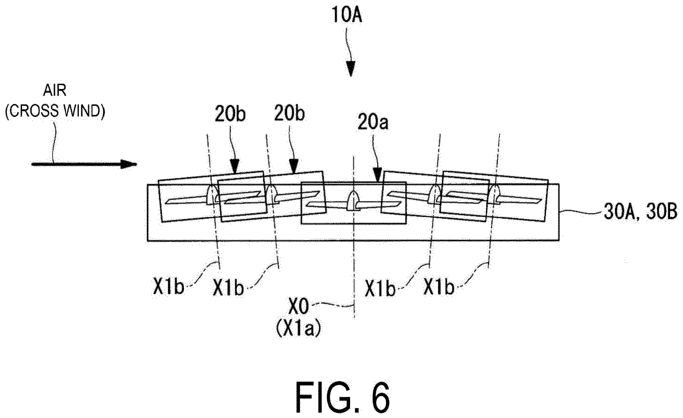

Next, a modified example of the ducted fan device 10A according to the first embodiment will be described with reference to FIG. 6.

FIG. 6 is a longitudinal cross-sectional view of a ducted fan device 10A according to a modified example taken along cutting line II-II (see FIG. 1).

As illustrated in FIG. 6, the axis X1b of each peripheral fan device 20b may be inclined with respect to the axis X0 of the ducted fan device 10A.

As a specific form, for example, the axis X1b of each peripheral fan device 20b is inclined such that the lip portion 26 approaches the adjacent large duct 30A.

Thus, since the inlet 24 of the small duct 23 is inclined in the direction of receiving the cross wind, the inflow angle of the air flowing into the lip portion 26 of the small duct 23 can be made gentler. Accordingly, it is possible to suppress separation in the lip portion 26 and to suppress a decrease in thrust force due to separation.

### Second Embodiment

Hereinafter, a ducted fan device according to a second embodiment of the present disclosure will be described with reference to the drawings.

The ducted fan device 10B of the present embodiment is different from the ducted fan device 10A of the first embodiment in that a plurality of central fan devices 20a are provided. Therefore, the same components are denoted by the same reference signs, and description thereof will be omitted.

### Configuration of Ducted Fan Device

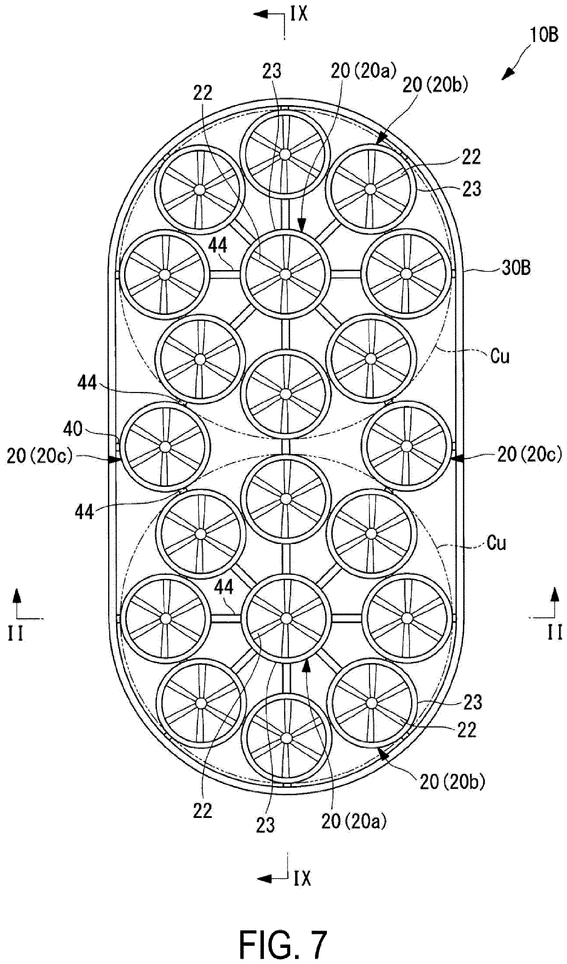

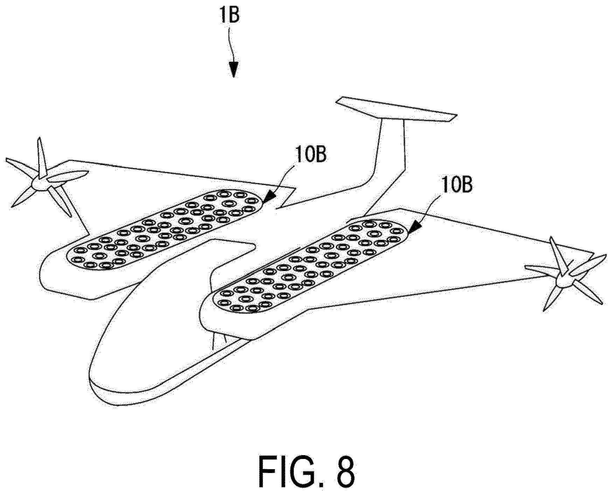

First, an outline of the configuration of a ducted fan device 10B will be described with reference to FIGS. 7 and 8.

FIG. 7 is a plan view of the ducted fan device 10B. FIG. 8 is a perspective view illustrating an aircraft 1B in which a ducted fan device 10B is provided.

As illustrated in FIG. 7, the ducted fan device 10B includes a plurality of (two in the figure) central fan devices 20a. As in the first embodiment, peripheral fan devices 20b are disposed around the central fan device 20a. That is, the fan devices 20 of the ducted fan device 10B include two units (indicated by circles Cu in the figure), each including the plurality of fan devices 20 in the first embodiment.

The ducted fan device 10B includes a tubular large duct 30B surrounding all the fan devices 20. The large duct 30B has a rounded rectangular shape in plan view.

The ducted fan device 10B includes a peripheral fan devices 20c between the large duct 30B and the two circles Cu. By disposing the peripheral fan devices 20c, the fan devices 20 can be disposed inside the large duct 30B having a rounded rectangular shape in plan view without an excessive clearance.

As illustrated in FIG. 8, the ducted fan device 10B configured as described above is attached to, for example, an aircraft 1B such as a fixed rotor machine, and serves as a device that mainly generates thrust force necessary for levitation of the aircraft 1B.

According to the present embodiment, the following effects are obtained.

By the plurality of central fan devices 20a, the fan devices 20 can be regularly disposed not only in a cylindrical large duct but also in various forms of large duct 30B.

Further, the accommodation capacity of the fan devices 20 can be increased as compared with the case where a plurality of ducted fan devices 10A according to the first embodiment are disposed. Thus, the thrust-to-weight ratio can be improved.

### Modified Example

Next, a modified example of the ducted fan device 10B according to the second embodiment will be described with reference to FIGS. 6, 9, and 10.

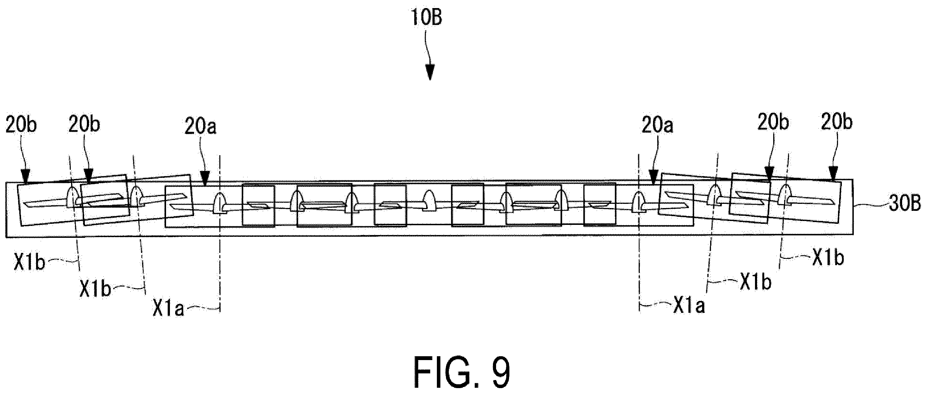

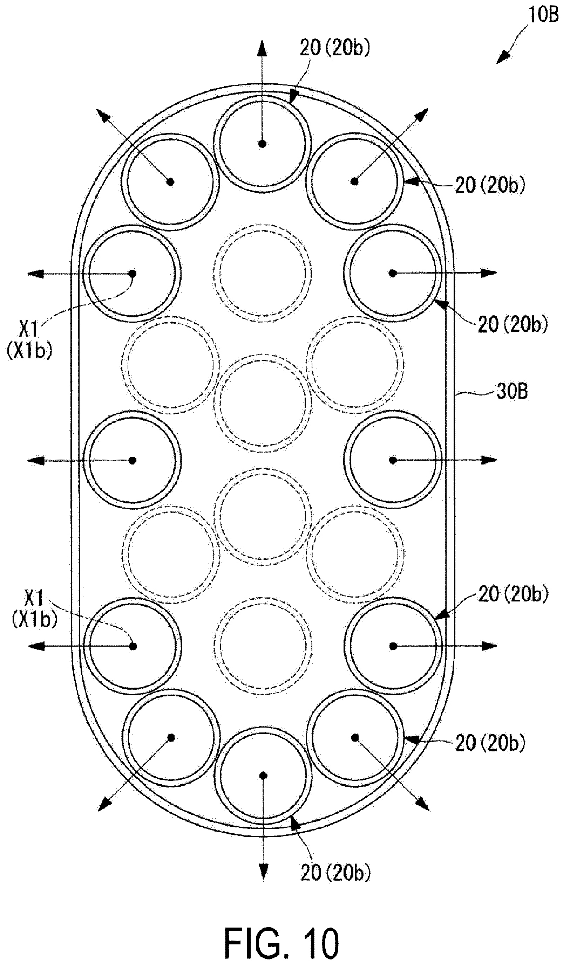

FIG. 6 is a cross-sectional view of a ducted fan device 10B according to a modified example taken along cutting line II-II (see FIG. 7). FIG. 9 is a cross-sectional view of the ducted fan device 10B taken along cutting line IX-IX illustrated in FIG. 7. FIG. 10 is a simplified plan view of the ducted fan device 10B.

As illustrated in FIGS. 6 and 7, the axis X1b of each peripheral fan device 20b may be inclined with respect to the axis X1a of the central fan device 20a.

As a specific form, for example, as illustrated by an arrow line in FIG. 10, the axis X1b of each peripheral fan device 20b is inclined so that the lip portion 26 approaches the adjacent large duct 30B.

Thus, since the inlet 24 of the small duct 23 is inclined in the direction of receiving the cross wind, the inflow angle of the air flowing into the lip portion 26 of the small duct 23 can be made gentler. Accordingly, it is possible to suppress separation in the lip portion 26 and to suppress a decrease in thrust force due to separation.

The axis X1 of the fan device 20 (the fan device 20 indicated by the dotted line in FIG. 10) separated from the large duct 30B may not be inclined.

The embodiments described above are understood as follows, for example.

That is, a ducted fan device (10A, 10B) according to an embodiment of the present disclosure includes, a plurality of fan devices (20), each including a fan (22) configured to rotate about an axis (X1) to generate an air flow, and a small duct (23) having a cylindrical shape surrounding the fan (22) about the axis (X1) and extending in a direction of the axis (X1), and a large duct (30A, 30B) having a tubular shape surrounding all of the plurality of fan devices (20). The plurality of fan devices (20) include a central fan device (20a), and a plurality of peripheral fan devices (20b) disposed at an outer peripheral of the small duct (23) included in the central fan device (20a).

A ducted fan device (10A, 10B) according to the present aspect includes, a plurality of fan devices (20), each including a fan (22) configured to rotate about an axis (X1) to generate an air flow, and a small duct (23) having a cylindrical shape surrounding the fan (22) about the axis (X1) and extending in a direction of the axis (X1), and a large duct (30A, 30B) having a tubular shape and surrounding all of the plurality of fan devices (20). The plurality of fan devices (20) include a central fan device (20a), and a plurality of peripheral fan devices (20b) disposed at an outer peripheral of the small duct (23) included in the central fan device (20a). Therefore, the respective air flows generated by the central fan device (20a) and the peripheral fan devices (20b) draw in the surrounding air by the Coanda effect, so that an air flow by the Coanda effect can be induced between the small duct (23) of the central fan device (20a) and the small ducts (23) of the peripheral fan devices (20b). That is, the air flow can be generated between the small ducts (23) without providing an air flow generation device such as a fan device. Thus, the thrust force of the ducted fan device (10A, 10B) as a whole is improved. Further, by surrounding all the fan devices (20) with the large duct (30A, 30B), the thrust force of the ducted fan device (10A, 10B) as a whole can be further improved.

In addition, since the peripheral fan devices (20b) are disposed at the outer peripheral of the small duct (23) included in the central fan device (20a), it is easy to manage the interval between the central fan device (20a) and the peripheral fan devices (20b) compared to a case where the fan devices (20) are irregularly disposed.

In addition, since the large duct (30A, 30B) and the small duct (23) adjacent to the large duct (30A, 30B) have a so-called Double Duct relationship, it is possible to suppress separation at the lip portion (26) of the small duct (23) accommodated inside by the large duct (30A, 30B) and to suppress a decrease in thrust force due to separation.

In addition, by providing a plurality of fan devices (20) that actually generate air flow, even when one fan device (20) fails, the thrust force of the failed fan device (20) can be supplemented by the other fan devices (20), so that redundancy of the entire ducted fan devices (10A, 10B) can be ensured.

Further, in the ducted fan device (10A, 10B) according to an embodiment of the present disclosure, each axis (X1) of the plurality of peripheral fan devices (20b) is disposed on a concentric circle centered on the axis (X1) of the central fan device (20a).

In the ducted fan device (10A, 10B) according to the present aspect, since each axis (X1) of the plurality of peripheral fan devices (20b) is disposed on a concentric circle centered on the axis (X1) of the central fan device (20a), the plurality of fan devices (20) can be disposed efficiently and uniformly. This makes it possible to efficiently induce air flow by the Coanda effect.

In a ducted fan device (10A) according to an embodiment of the present disclosure, the large duct (30A) has a cylindrical shape centered on the axis (X1) of the central fan device (20a).

In the ducted fan device (10A) according to the present aspect, since the large duct (30A) has a cylindrical shape centered on the axis (X1) of the central fan device (20a), the large duct (30A) can efficiently and uniformly surround the peripheral fan devices (20b) disposed in a circular shape. Thus, the effect of the double duct can be further enhanced.

In addition, the ducted fan device (10B) according to an embodiment of the present disclosure includes a plurality of the central fan devices (20a).

Since the ducted fan device (10B) according to the present aspect includes the plurality of central fan devices (20a), the fan devices (20) can be disposed in the large duct (30B) having various shapes (e.g., a rounded rectangular shape).

In the ducted fan device (10A, 10B) according to an embodiment of the present disclosure, the axis (X1) of the peripheral fan device (20b) adjacent to the large duct (30A, 30B) is inclined toward the adjacent large duct (30A, 30B).

In the ducted fan device (10A, 10B) according to the present aspect, the axis (X1) of the peripheral fan device (20b) adjacent to the large duct (30A, 30B) is inclined toward the adjacent large duct (30A, 30B), so that the small duct (23) of the peripheral fan device (20b) adjacent to the large duct (30A, 30B) can be inclined toward the large duct (30A, 30B). Thus, the inflow angle of the air flowing into the lip portion (26) of the small duct (23) can be made gentler. This makes it possible to suppress separation at the lip portion (26) and to suppress a decrease in thrust force due to separation.

In the ducted fan device (10A, 10B) according to an embodiment of the present disclosure, when a diameter of each small duct (23) is D, a clearance between the small duct (23) of the central fan device (20a) and the small duct (23) of each peripheral fan device (20b) is 0.5D or more and 1.5D or less.

In the ducted fan device (10A, 10B) according to the present aspect, when the diameter of each small duct (23) is D, the clearance between the small duct (23) of the central fan device (20a) and the small duct (23) of each peripheral fan device (20b) is 0.5D or more and 1.5D or less. Thus, an appropriate clearance can be provided between the small duct (23) of the central fan device (20a) and the small duct (23) of each peripheral fan device (20b). This makes it possible to efficiently induce air flow by the Coanda effect.

When the clearance is too short or too long, the surrounding air is not sufficiently drawn in, and air flow is hardly induced.

In the ducted fan device (10A, 10B) according to an embodiment of the present disclosure, the fan devices (20) are individually driven by respective electric motors, and include a control unit that is configured to control each of the electric motors separately.

In the ducted fan device (10A, 10B) according to the present aspect, the fan devices (20) are individually driven by respective electric motors, and include a control unit that is configured to control each of the electric motors separately. Thus, the number of rotations of each fan can be separately controlled. Accordingly, for example, it is possible to perform control such that the number of rotations of the fan (22) included in the fan device (20) disposed at a place where separation is likely to occur is increased to suppress separation.

An aircraft (1A, 1B) according to an embodiment of the present disclosure includes the above-described ducted fan device (10A, 10B).

### Reference Signs List

1A, 1B Aircraft
10A, 10B Ducted fan device
20 Fan device
20a Central fan device
20b Peripheral fan device
20c Peripheral fan device
22 Fan
23 Small duct
24 Inlet
25 Outlet
26 Lip portion
30A, 30B Large duct
32 Inlet
33 Outlet
34 Lip portion
40 Support member
44 Connecting member

## Claims

1. A ducted fan device (10A, 10B), comprising:
a plurality of fan devices (20), each including
a fan (22) configured to rotate about an axis to generate an air flow, and
a small duct (23) that is a cylindrical member having an inner peripheral surface and an outer peripheral surface, and that surrounds the fan (22) on an inside of the inner peripheral surface of the small duct (23) and about the axis; and
a large duct (30A,30B) that is a tubular member having an inner peripheral surface and an outer peripheral surface, and that surrounds all of the plurality of fan devices (20) on an inside of the inner peripheral surface of the large duct (30A, 30B),
wherein
the plurality of fan devices (20) include
a central fan device (20a), and
a plurality of peripheral fan devices (20b) disposed at the outer peripheral surface of the small duct (23) included in the central fan device (20a).

2. The ducted fan device according to claim 1, wherein each axis (X1) of the plurality of peripheral fan devices (20b) is disposed on a concentric circle centered on the axis (X0) of the central fan device (20a).

3. The ducted fan device according to claim 2, wherein the large duct (30A) is axial symmetric about the axis of the central fan device (20a).

4. The ducted fan device according to claim 2 comprising a plurality of units (Cu), one unit being configured by one central fan device (20a) and the peripheral fan devices (20b), wherein
the large duct (30B) surrounds the plurality of units (Cu) .

5. The ducted fan device according to any one of claims 1 to 4, wherein the axis (X1b) of at least one of the peripheral fan devices (20b) is inclined toward
the axis (X0) of the central fan device (20a) such that a lip portion of the small duct (23) approaches the large duct (30A).

6. The ducted fan device according to any one of claims 1 to 5, wherein when a diameter of each small duct (23) is D, a clearance between the small (23) duct of the central fan (20a) device and the small duct (23) of each peripheral fan device (20b) is 0.5D or more and 1.5D or less.

7. The ducted fan device according to any one of claims 1 to 6, wherein
each fan device (20)
is individually driven by an electric motor, and
includes a control unit that individually controls each electric motor.

8. An aircraft (1A, 1B), comprising the ducted fan device (10A, 10B) according to any one of claims 1 to 7.

## Patentansprüche

1. Mantelgebläsevorrichtung (10A, 10B), die Folgendes umfasst:
mehrere Gebläsevorrichtungen (20), die jeweils Folgendes enthalten:
ein Gebläse (22), das konfiguriert ist, sich um eine Achse zu drehen, um einen Luftdurchfluss zu erzeugen, und
einen kleinen Kanal (23), der ein zylindrisches Element ist, das eine Innenumfangsoberfläche und eine Außenumfangsoberfläche aufweist, und der das Gebläse (22) auf einer Innenseite der Innenumfangsoberfläche des kleinen Kanals (23) und um die Achse umgibt; und
einen großen Kanal (30A, 30B), der ein rohrförmiges Element ist, das eine Innenumfangsoberfläche und eine Außenumfangsoberfläche aufweist, und der alle der mehreren Gebläsevorrichtungen (20) auf einer Innenseite der Innenumfangsoberfläche des großen Kanals (30A, 30B) umgibt, wobei
die mehreren Gebläsevorrichtungen (20) Folgendes enthalten:
eine zentrale Gebläsevorrichtung (20a) und
mehrere Umfangsgebläsevorrichtungen (20b), die an der Außenumfangsoberfläche des kleinen Kanals (23), der in der zentralen Gebläsevorrichtung (20a) enthalten ist, angeordnet sind.

2. Mantelgebläsevorrichtung nach Anspruch 1, wobei jede Achse (X1) der mehreren Umfangsgebläsevorrichtungen (20b) auf einem konzentrischen Kreis angeordnet ist, der auf die Achse (X0) der zentralen Gebläsevorrichtung (20a) zentriert ist.

3. Mantelgebläsevorrichtung nach Anspruch 2, wobei der große Kanal (30A) um die Achse der zentralen Gebläsevorrichtung (20a) axialsymmetrisch ist.

4. Mantelgebläsevorrichtung nach Anspruch 2, die mehrere Einheiten (Cu) umfasst, wobei eine Einheit durch eine zentrale Gebläsevorrichtung (20a) und die Umfangsgebläsevorrichtungen (20b) konfiguriert ist und
der große Kanal (30B) die mehreren Einheiten (Cu) umgibt.

5. Mantelgebläsevorrichtung nach einem der Ansprüche 1 bis 4, wobei die Achse (X1b) mindestens einer der Umfangsgebläsevorrichtungen (20b) zur Achse (X0) der zentralen Gebläsevorrichtung (20a) geneigt ist, derart, dass ein Lippenabschnitt des kleinen Kanals (23) sich dem großen Kanal (30A) nähert.

6. Mantelgebläsevorrichtung nach einem der Ansprüche 1 bis 5, wobei dann, wenn ein Durchmesser jedes kleinen Kanals (23) D ist, ein Abstand zwischen dem kleinen Kanal (23) der zentralen Gebläsevorrichtung (20a) und dem kleinen Kanal (23) jeder Umfangsgebläsevorrichtung (20b) im Bereich von 0,5 D bis 1,5 D liegt.

7. Mantelgebläsevorrichtung nach einem der Ansprüche 1 bis 6, wobei
jede Gebläsevorrichtung (20)
durch einen Elektromotor einzeln angetrieben wird und
eine Steuereinheit enthält, die jeden Elektromotor einzeln steuert.

8. Luftfahrzeug (1A, 1B), das die Mantelgebläsevorrichtung (10A, 10B) nach einem der Ansprüche 1 bis 7 umfasst.

## Revendications

1. Dispositif de soufflante carénée (10A, 10B), comprenant :
une pluralité de dispositifs de soufflante (20), chacun incluant
une soufflante (22) configurée pour tourner autour d'un axe pour générer un écoulement d'air, et
un petit carénage (23) qui est un organe cylindrique comportant une surface périphérique intérieure et une surface périphérique extérieure, et qui entoure la soufflante (22) sur un intérieur de la surface périphérique intérieure du petit carénage (23) et autour de l'axe ; et
un grand carénage (30A, 30B) qui est un organe tubulaire comportant une surface périphérique intérieure et une surface périphérique extérieure, et qui entoure l'intégralité de la pluralité des dispositifs de soufflante (20) sur un intérieur de la surface périphérique intérieure du grand carénage (30A, 30B),
dans lequel
la pluralité de dispositifs de soufflante (20) inclut
un dispositif de soufflante central (20a), et
une pluralité de dispositifs de soufflante périphériques (20b) disposés au niveau de la surface périphérique extérieure du petit carénage (23) inclus dans le dispositif de soufflante central (20a).

2. Dispositif de soufflante carénée selon la revendication 1, dans lequel chaque axe (X1) de la pluralité de dispositifs de soufflante périphériques (20b) est disposé sur un cercle concentrique centré sur l'axe (X0) du dispositif de soufflante central (20a).

3. Dispositif de soufflante carénée selon la revendication 2, dans lequel le grand carénage (30A) est à symétrie axiale par rapport à l'axe du dispositif de soufflante central (20a).

4. Dispositif de soufflante carénée selon la revendication 2, comprenant une pluralité d'unités (Cu), une unité étant configurée par un dispositif de soufflante central (20a) et les dispositifs de soufflante périphériques (20b), dans lequel
le grand carénage (30B) entoure la pluralité d'unités (Cu).

5. Dispositif de soufflante carénée selon l'une quelconque des revendications 1 à 4, dans lequel l'axe (X1b) d'au moins l'un des dispositifs de soufflante périphériques (20b) est incliné vers l'axe (X0) du dispositif de soufflante central (20a) de sorte qu'une partie de lèvre du petit carénage (23) s'approche du grand carénage (30A).

6. Dispositif de soufflante carénée selon l'une quelconque des revendications 1 à 5, dans lequel, lorsqu'un diamètre de chaque petit carénage (23) est D, un dégagement entre le petit carénage (23) du dispositif de soufflante central (20a) et le petit carénage (23) de chaque dispositif de soufflante périphériques (20b) est 0,5D ou plus et 1,5D ou moins.

7. Dispositif de soufflante carénée selon l'une quelconque des revendications 1 à 6, dans lequel
chaque dispositif de soufflante (20) est entraîné individuellement par un moteur électrique, et
inclut une unité de commande qui commande individuellement chaque moteur électrique.

8. Aéronef (1A, 1B), comprenant le dispositif de soufflante carénée (10A, 10B) selon l'une quelconque des revendications 1 à 7.
